# EUROPÄISCHE PATENTSCHRIFT

(11) **EP 1 105 955 B1**
(45) Veröffentlichungstag und Bekanntmachung des Hinweises auf die Patenterteilung: **02.09.2009**
(21) Anmeldenummer: 00951212.0
(22) Anmeldetag: 16.06.2000
(51) Int. Cl.: H02H 1/00

(54) **SCHALTUNG ZUM DETEKTIEREN EINES UNZULÄSSIG HOHEN STROMES IN EINER ENDSTUFE**
CIRCUIT FOR DETECTING AN INADMISSIBLY HIGH CURRENT IN AN OUTPUT STAGE
CIRCUIT DE DETECTION D'UN COURANT D'UNE INTENSITE INADMISSIBLE DANS UN ETAGE FINAL

(30) Priorität: 16.06.1999 DE 19927389
(43) Veröffentlichungstag der Anmeldung: 13.06.2001
(73) Patentinhaber: ROBERT BOSCH GMBH, 70442 Stuttgart (DE)
(72) Erfinder: KERN, Robert, D-77830 Buehlertal (DE)
(86) Internationale Anmeldenummer: PCT/DE2000/001905
(87) Internationale Veröffentlichungsnummer: WO 2000/077905

(56) Entgegenhaltungen:
- EP-A- 0 193 447
- DE-A- 4 329 919
- DE-A- 19 704 166
- US-A- 4 879 641

## Beschreibung

### Stand der Technik

Die Erfindung geht aus von einer Schaltung zum Detektieren eines unzulässig hohen Stroms in einer Endstufe nach der Gattung des unabhängigen Anspruchs.

Aus der DE-A 43 29 919 ist eine Endstufe zum Betreiben eines in einem Kraftfahrzeug angeordneten Verbrauchers bekannt, die zwei zwischen einem ersten und zweiten Stromversorungsanschluß liegende Serienschaltungen jeweils eines ersten mit einem zweiten Transistor enthält. Die vier Endstufentransistoren bilden eine Brückenschaltung, in deren Diagonale der elektrische Verbraucher angeordnet ist. Der durch jeden der vier Endstufentransistoren fließende Strom wird jeweils von einem Stromsensor erfaßt und in einem Vergleicher mit einem vorgegebenen Maximalwert verglichen. Bei einer Schwellenüberschreitung wird der entsprechende Endstufentransistor abgeschaltet. Bei einem Einsatz von preisgünstigen Stromsensoren, die keine Potentialtrennung ermöglichen, werden bei der vorbekannten Schaltung vier auf jeweils unterschiedlichen Potentialen liegende Komparatoren benötigt.

Der Erfindung liegt die Aufgabe zugrunde, eine Schaltung zum Detektieren eines unzulässig hohen Stroms in einer Endstufe anzugeben, die mit möglichst wenigen und einfachen elektronischen Bauelementen auskommt.

Die Aufgabe wird durch die im unabhängigen Anspruch angegebenen Merkmale gelöst.

### Vorteile der Erfindung:

Die Erfindung sieht eine zwischen einem ersten und zweiten Stromversorgungsanschluß liegende Serienschaltung eines ersten Transistors mit einem zweiten Transistor vor, wobei ein Eingang eines Vergleichers am Verbindungspunkt der beiden Transistoren angeschlossen ist. Der andere Eingang des Vergleichers liegt am Mittenabgriff eines zwischen den beiden Stromversorgungsleitungen liegenden Spannungsteilers. Vorgesehen sind Umschaltmittel zum Umschalten des Spannungsteilerverhältnisses, die vom Schaltsignal eines der beiden Transistoren angesteuert werden.

Die erfindungsgemäße Schaltung erfaßt den an der Schaltstrecke der Transistoren auftretenden Spannungsabfall im eingeschalteten Zustand an der Schaltstrecke. Die beiden Transistoren sind beispielsweise in einer Halb- oder Vollbrückenschaltung angeordnet. Beide Transistoren sind wechselweise ein- oder ausgeschaltet. Ein Eingangssignal eines Transistors kann deshalb herangezogen werden zum Betätigen der Umschaltmittel, welche das Spannungsteilerverhältnis umschalten. Durch die Umschaltung ist eine Anpassung der Schaltschwelle des Vergleichers entweder für den ersten oder für den zweiten Transistor möglich. Im Normalbetrieb wechselt das Ausgangssignal des Vergleichers in den jeweils anderen Zustand beim Wechsel des Eingangssignals eines der beiden Transistoren. Ausgehend von diesem Ausgangssignal des Vergleichers findet bei einem Überstrom ebenfalls ein Wechsel in den anderen Signalzustand statt, der in einer weitergehenden, nicht dargestellten Schaltung, detektiert und beispielsweise zum Abschalten des einen oder sämtlicher Transistoren herangezogen werden kann.

Der wesentliche Vorteil der erfindungsgemäßen Schaltung liegt darin, daß kein zusätzlicher Stromsensor und lediglich ein Vergleicher für die beiden Transistoren benötigt wird. Die an die verwendeten elektronischen Bauteile zu stellenden Anforderungen sind relativ gering, so daß diese kostengünstig sind.

Die erfindungsgemäße Schaltung eignet sich insbesondere zur Verwendung in einer Halbbrückenschaltung, bei der der andere Brückenzweig durch zwei Kondensatoren gebildet wird. Insbesondere ist die erfindungsgemäße Schaltung geeignet zur Verwendung in einer Vollbrückenschaltung bei der die Kondensatoren der Halbbrückenschaltung ersetzt sind durch Endstufentransistoren. Auch in diesem weiteren Brückenzweig kann die erfindungsgemäße Schaltung eingesetzt werden, so daß für eine Vollbrückenschaltung insgesamt zwei Vergleicher sowie zwei Umschaltmittel erforderlich sind.

Vorteilhafte Weiterbildungen und Ausgestaltungen ergeben sich aus abhängigen Ansprüchen.

Das im Normalbetrieb in Abhängigkeit von den Eingangssignalen wechselnde Ausgangssignal des Vergleichers wird vorteilhafterweise einer Logik-Auswahlschaltung zugeführt, die in Abhängigkeit von dem Eingangssignal eines der beiden Transistoren dafür sorgt, daß ein Signalwechsel am Ausgang der Logik-Auswahlschaltung nur dann auftritt, wenn ein unzulässig hoher Strom in einem der beiden Transistoren auftritt. Eine besonders einfache Realisierung der Logik-Auswahlschaltung ist durch eine Exklusiv-Oder-Anordnung (EXOR) möglich.

Eine andere vorteilhafte Ausgestaltung betrifft die Umschaltmittel, die vorzugsweise einen Schalttransistor enthalten, der einem Widerstand des Spannungsteilers einen Parallelwiderstand hinzuschaltet.

Weitere vorteilhafte Ausgestaltungen und Weiterbildungen der erfindungsgemäßen Schaltung ergeben sich aus der Beschreibung.

### Zeichnung

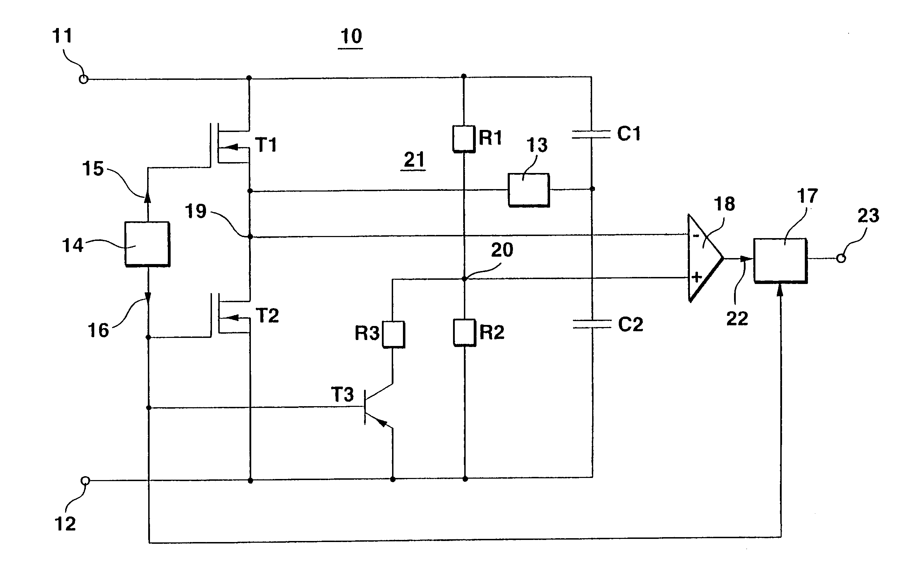

Die einzige Figur zeigt ein Ausführungsbeispiel einer erfindungsgemäßen Schaltung zum Detektieren eines unzulässig hohen Stroms in einer Endstufe.

Die Figur zeigt eine Endstufe 10, die beispielsweise als Halbbrückenschaltung ausgestaltet ist. Zwischen einem ersten und zweiten Stromversorgungsanschluß 11, 12 liegt eine Serienschaltung eines ersten Transistors T1 mit einem zweiten Transistor T2. Die Transistoren T1, T2 bilden einen ersten Brückenzweig der Halbbrückenschaltung der Endstufe 10. Im zweiten Brückenzweig sind der erste und der zweite Kondensator C1, C2 enthalten. Die mit elektischer Energie zu versorgende Last 13 liegt in der Brückendiagonale.

Eine Steuerschaltung 14 gibt an den Transistor T1 ein erstes Schaltsignal 15 und an den Transistor T2 ein zweites Schaltsignal 16 ab. Das zweite Schaltsignal 16 wird weiterhin einem Schalttransistor T3 sowie einer Logik-Auswahlschaltung 17 zugeführt.

Ein Vergleicher 18 vergleicht die am Verbindungspunkt 19 der beiden Transistoren T1, T2 auftretende Spannung mit der am Mittenabgriff 20 eines zwischen den beiden Stromversorgungsanschlüsse 11, 12 geschalteten Spannungsteilers 21. Der Spannungsteiler 21 enthält die Widerstände R1, R2, wobei der Widerstand R2 vom Mittenabgriff 20 zum zweiten Stromversorgungsanschluß 12 führt. Der Schalttransistor T3, der allgemein als Umschaltmittel bezeichnet wird, kann zum Widerstand R2 einen Parallelwiderstand R3 parallel schalten.

Der Vergleicher 18 gibt ein Ausgangssignal 22 an die Logik-Auswahlschaltung 17 ab, die an ihrem Ausgang ein Überstromsignal 23 bereitstellt.

Die erfindungsgemäße Schaltung zum Detektieren eines unzulässig hohen Stroms in der Endstufe 10 arbeitet folgendermaßen:

Ein Überstrom in einem der Transistoren T1, T2 wird durch eine Überwachung des an der Schaltstrecke der Transistoren T1, T2 auftretenden Spannungsabfalls erkannt. Die Transistoren T1, T2 können auch andere HalbleiterBauelemente sein, bei denen der an der Schaltstrecke auftretende Spannungsabfall im eingeschalteten Zustand ein Maß für den Strom durch das Halbleiterbauelement fließende ist.

Der Spannungsabfall wird vom Vergleicher 18 überwacht. Die Vergleichsspannung tritt am Mittenabgriff 20 des Spannungsteilers 21 auf. Von den beiden Transistoren T1, T2 ist stets nur einer eingeschaltet. Entsprechend gibt die Steuerschaltung 14 entweder nur das erste Steuersignal 15 zum Einschalten des Transistors T1 oder das zweite Steuersignal 16 zum Einschalten des Transistors T2 aus. Wenn demnach der Transistor T1 eingeschaltet ist, bleiben der Transistor T2 sowie das beispielsweise als Schalttransistor T3 realisierte Umschaltmittel abgeschaltet. Der Parallelwiderstand R3 ist in diesem Betriebszustand wirkungslos, so daß die Vergleichsspannung am Mittenabgriff 20 allein von den Widerständen R1, R2 festgelegt ist. Die Widerstände R1, R2 sind derart zu dimensionieren, daß am Mittenabgriff 20 eine Spannung auftritt, die auf den im Normalbetrieb durch den Transistor T1 maximal fließenden Strom abgestimmt ist. Ein im Transistor auftretender Überstrom verursacht über der Schaltstrecke des Transistors T1 einen Spannungsabfall, der so groß ist, daß die Vergleichsspannung unterschritten wird. Bei der in der Figur eingetragenen Schaltlogik des Vergleichers 18, bei der das Ausgangssignal 22 des Vergleichers 18 auf einen logischen Low-Pegel geht, wenn die Spannung am Verbindungspunkt 19 ein geringeres Potential als am Mittenabgriff 20 aufweist, tritt demnach bei einem Überstrom im Transistor T1 ein Ausgangssignal 22 mit Low-Pegel auf.

Die gegebenenfalls vorhandene Logik-Auswahlschaltung 17, die vorzugsweise als Exklusiv-Oder-Anordnung (EXOR) realisiert ist, gibt als Überstromsignal 23 ebenfalls einen Low-Pegel ab, da der Exklusiv-Oder-Anordnung 17 das zweite Schaltsignal 16 ebenfalls als Low-Pegel, bei dem die Transistoren T2, T3 jeweils abgeschaltet sind, zugeführt wird.

Tritt ein normaler Strom im Transistor T1 auf, so reicht der Spannungsabfall am Transistor T1 nicht aus, den Vergleicher 18 umzuschalten. Das Ausgangssignal 22 des Vergleichers liegt in diesem Betriebszustand auf einem logischen High-Pegel, der gleichfalls am Ausgang der Logik-Auswahlschaltung 17 auftritt. Ein High-Pegel als Überstromsignal 23 bedeutet, daß kein Überstrom vorliegt.

Nach einem Umschalten der Steuerschaltung 14, wenn also das erste Steuersignal 15 entfällt und statt dessen das zweite Steuersignal 16 zum Einschalten des Transistors T2 und des Transistors T3 auftritt, überwacht der Vergleicher 18 den Spannungsabfall am Transistor T2. Der Schalttransistor T3 greift in den Spannungsteiler 21 ein durch die Parallelschaltung des Widerstands R3 zum Widerstand R2. Der Widerstand R3 ist derart zu dimensionieren, daß die am Mittenabgriff 20 des Spannungsteilers 21 auftretende Vergleichsspannung auf den maximal zulässigen, am Transistor T2 auftretenden Spannungsabfall festgelegt wird. Bei einem zulässigen Strom durch den Transistor T2 ist dieser Spannungsabfall kleiner als die Vergleichsspannung, sodaß der Vergleicher 18 ein Ausgangssignal mit Low-Pegel ausgibt. Die Logik-Auswahlschaltung 17 gibt ein Ausgangssignal mit einem High-Pegel aus, da das zweite Schaltsignal 16 jetzt einen High-Pegel aufweist. Überschreitet der durch den Transistor T2 fließende Strom das vorgegebenen Maß, dann springt das Ausgangssignal 22 des Vergleichers 18 auf einen High-Pegel, der bei einem gleichzeitig vorliegenden zweiten Schaltsignal 16 auf High-Pegel zu einem Überstromsignal 23 mit logischem Low-Pegel führt.

Das Überstromsignal 23 am Ausgang der Logik-Auswahlschaltung 17 kann dazu verwendet werden, die Endstufe 10 vollständig oder zumindest teilweise abzuschalten. Insbesondere kann der jeweilige Transistor, in dem der Überstrom aufgetreten ist, mittels der Steuerschaltung 14 einzeln abgeschaltet werden.

Die Logik-Auswahlschaltung 17 sorgt dafür, daß bei einem Überstrom das Überstromsignal 23 stets den selben logischen Pegel aufweist. Da die beiden Schaltsignale 15, 16 stets bekannt sind, ist die Logik-Auswahlschaltung 17 nicht erforderlich. Der bei einem Wechsel der Schaltpegel der beiden Schaltsignale 15, 16 auftretende Signalwechsel im Ausgangssignal 22 des Vergleichers 18 im Rahmen eines normalen Betriebsszustands ohne Überstrom kann innerhalb der nicht näher beschriebenen Abschalteanordnung für die gesamte Endstufe 10 oder für den jeweils betroffenen Transistor T1, T2 enthalten sein.

Die in der Figur gezeigte Halbbrückenschaltung kann durch Verdopplung der erfindungswesentlichen Komponenten ohne Weiteres zu einer Vollbrückenschaltung ergänzt werden. Anstelle der beiden Kondensatoren C1, C2 sind weitere Transistoren vorzusehen. Weiterhin erforderlich ist ein weiterer umschaltbarer Spannungsteiler 21 sowie ein weiterer Vergleicher 18.

Die erfindungsgemäße Schaltung kann insbesondere für hochfrequent getaktete Endstufen 10 eingesetzt werden. Bei einer Reduzierung der Taktfrequenz können zur weiteren Kostenreduzierung die Bauteilekosten weiterhin dadurch reduziert werden, daß ein Mikroprozessor mit integrierten A/D-Wandlern und einer digitalen Signalverarbeitung eingesetzt wird.

## Patentansprüche

1. Schaltung zum Detektieren eines unzulässig hohen Stroms in einer Endstufe (10), die eine zwischen einem ersten und zweiten Stromversorgungsanschluß (10, 12) liegende Serienschaltung eines ersten Halbleiterbauelements (T1) mit einem zweiten Halbleiterbauelement (T2) enthält, mit einem Vergleicher (18), der den an einem Halbleiterbauelement (T1, T2) auftretenden Spannungsabfall mit einem vorgegebenen Schwellenwert vergleicht, **dadurch gekennzeichnet, daß** ein Eingang des Vergleichers (18) am Verbindungspunkt des ersten Halbleiterbauelements (T1) mit dem zweiten Halbleiterbauelements (T2) angeschlossen ist, daß der andere Eingang des Vergleichers (18) am Mittenabgriff (20) eines zwischen den beiden Stromversorgungsanschlüssen (11, 12) liegenden Spannungsteilers (21) angeschlossen ist, daß Umschaltmittel (T3) zum Umschalten des Spannungsteilerverhältnisses vorgesehen sind und daß die Umschaltmittel (T3) vom Schaltsignal (15, 16) eines der Halbleiterbauelemente (T1, T2) gesteuert sind.

2. Schaltung nach Anspruch 1, **dadurch gekennzeichnet, daß** eine Logik-Auswahlschaltung (17) vorgesehen ist, der das Ausgangssignal (22) des Vergleichers (18) und das Schaltsignal (15, 16) zugeführt sind.

3. Schaltung nach Anspruch 2, **dadurch gekennzeichnet, daß** die Logik-Auswahlschaltung (17) als Exklusiv-Oder-Anordnung realisiert ist.

4. Schaltung nach Anspruch 1, **dadurch gekennzeichnet, daß** als Umschaltmittel (T3) ein Schalttransistor vorgesehen ist, der einem Widerstand (R1, R2) des Spannungsteilers (21) einen Parallelwiderstand (R3) parallel schaltet.

## Claims

1. Circuit for detecting an inadmissibly high current in an output stage (10) containing a series circuit comprising a first semiconductor component (T1) and a second semiconductor component (T2) between a first power supply connection (10) and a second power supply connection (12), having a comparator (18) which compares the voltage drop across a semiconductor component (T1, T2) with a predefined threshold value, **characterized in that** one input of the comparator (18) is connected to the point at which the first semiconductor component (T1) and the second semiconductor component (T2) are connected, **in that** the other input of the comparator (18) is connected to the centre tap (20) of a voltage divider (21) between the two power supply connections (11, 12), **in that** changeover means (T3) for changing over the voltage divider ratio are provided, and **in that** the changeover means (T3) are controlled by the switching signal (15, 16) from one of the semiconductor components (T1, T2).

2. Circuit according to Claim 1, **characterized in that** a logic selection circuit (17) is provided and is supplied with the output signal (22) from the comparator (18) and the switching signal (15, 16).

3. Circuit according to Claim 2, **characterized in that** the logic selection circuit (17) is in the form of an exclusive OR arrangement.

4. Circuit according to Claim 1, **characterized in that** a switching transistor which connects a parallel resistor (R3) in parallel with one resistor (R1, R2) of the voltage divider (21) is provided as the changeover means (T3).

## Revendications

1. Circuit pour détecter un courant excessivement élevé dans un étage final (10) qui comprend un circuit série constitué d'un premier composant semiconducteur (T1) et d'un deuxième composant semiconducteur (T2) entre une première et une deuxième borne d'alimentation électrique (10, 12), comprenant un comparateur (18) qui compare la chute de tension qui se produit aux bornes d'un composant semiconducteur (T1, T2) avec une valeur de seuil prédéfinie, **caractérisé en ce qu'**une entrée du comparateur (18) est raccordée avec le deuxième composant semiconducteur (T2) au niveau du point de liaison du premier composant semiconducteur (T1), **en ce que** l'autre entrée du comparateur (18) est raccordée à la prise centrale (20) d'un diviseur de tension (21) qui se trouve entre les deux bornes d'alimentation électrique (11, 12), **en ce que** des moyens de permutation (T3) sont prévus pour permuter le rapport du diviseur de tension et **en ce que** les moyens de permutation (T3) sont commandés par le signal de commande (15, 16) de l'un des composants semiconducteurs (T1, T2).

2. Circuit selon la revendication 1, **caractérisé en ce qu'**il est prévu un circuit de sélection logique (17) auquel sont acheminés le signal de sortie (22) du comparateur (18) et le signal de commande (15, 16).

3. Circuit selon la revendication 2, **caractérisé en ce que** le circuit de sélection logique (17) est réalisé sous la forme d'un arrangement OU exclusif.

4. Circuit selon la revendication 1, **caractérisé en ce que** le moyen de permutation (T3) prévu est un transistor qui connecte une résistance parallèle (R3) en parallèle avec une résistance (R1, R2) du diviseur de tension (21).
